Europäisches Patentamt

European Patent Office

Office européen des brevets

(11) Veröffentlichungsnummer: **0 417 420 A1**

# EUROPÄISCHE PATENTANMELDUNG

(21) Anmeldenummer: 90113142.5

(22) Anmeldetag: 10.07.90

(51) Int. Cl.⁵: **B28D 1/14, F16B 13/12**

(30) Priorität: 11.09.89 DE 3930268

(43) Veröffentlichungstag der Anmeldung:
20.03.91 Patentblatt 91/12

(84) Benannte Vertragsstaaten:
AT BE CH DE DK ES FR GB GR IT LI NL SE

(71) Anmelder: fischerwerke Artur Fischer GmbH & Co. KG
Weinhalde 14 - 18
W-7244 Waldachtal 3/Tumlingen(DE)

(72) Erfinder: Fischer, Artur, Prof. Dr. h.c.
Weinhalde 34
W-7244 Waldachtal 3/Tumlingen(DE)
Erfinder: Haug, Willi
Märzenbergstrasse 37
W-7290 Freudenstadt(DE)

(54) Verfahren zur Montage eines Spreizelementes.

(57) Verfahren, Vorrichtung und Spreizelement für die Befestigung einer Fassadenplatte oder dgl. wobei nach Erstellung des zylindrischen Bohrloches durch Kreisbewegung des erfindungsgemäßen Bohrers (2) oder der Fassadenplatte (1) eine Hinterschneidung am Bohrlochgrund bewirkt wird, in die ein Spreizelement eingesetzt wird. Das Spreizelement besteht dabei aus einem mit einem Außengewinde versehenen Bolzen (6), der in eine konisch sich verengende Bohrung einer Scheibe (7), an deren Unterseite Spreizsegmente (8) angeordnet sind eingeschraubt wird, wodurch eine feste Verankerung im konisch hinterschnittenen Bohrloch erreicht ist.

FIG. 1

EP 0 417 420 A1

## VERFAHREN ZUR MONTAGE EINES SPREIZELEMENTES

Die Erfindung betrifft ein Vertahren zur Montage eines Spreizelementes in einem in eine Fassadenplatte oder dgl. mittels eines Bohrers hergestellten Bohrloch.

Es ist bekannt, als Aufnahme für Befestigungselemente ein in der Bohrlochtiefe konisch erweitertes Bohrloch vorzusehen um so eine feste Verankerung von Befestigungselementen zu erreichen. Die hauptsächlich für Bohrungen in Beton, Gasbeton oder dgl. vorgesehenen Bohrvorrichtungen weisen regelmäßig eine Anschlagplatte mit einer Mulde auf, in der ein am Bohrschaft angeordneter halbrundförmiger Bund gelagert ist. Durch eine Schwenk- und Rührbewegung wird die konische Hinterschneidung in der Bohrlochtiefe ausgerieben. Diese Bohrvorrichtungen sind allerdings für kunststoffähnliche Ankergründe oder Fassadenplatten nicht geeignet. Für so beschaffene Ankergründe ist ein Werkzeug bekannt, das mit einem herkömmlichen Bohrer zunächst in ein vorgebohrtes zylindrisches Bohrloch eingesetzt wird und dann mit dessen Fräskopf mittels einer ausgeführten Rührbewegung die Hinterschneidung entsprechend der konischen Ausbildung des Fräskopfes ausgerieben wird.

Der Erfindung liegt die Aufgabe zugrunde, ein Verfahren zur Montage von Spreizelementen in einem in eine Fassadenplatte oder dgl. mittels eines Bohrers hergestellten Bohrerloches zu schaffen, bei dem in einem Arbeitsgang zunächst eine zylindrische Bohrung sowie an deren Bohrlochgrund eine Hinterschneidung geschaffen wird, in der ein Spreizelement verankert wird.

Die Lösung dieser Aufgabe wird durch die im Hauptanspruch angegebenen Merkmale erhalten. Mittels eines Bohrers, an dessen Bohrschaft ein kegelförmiger Bohrkopf angeordnet ist wird eine Bohrung in einer Fassadenplatte oder dgl. ausgeführt und gleichzeitig mittels des konisch ausgebildeten Bohrkopfes durch Kreisbewegungen am Bohrlochgrund eine Hinterschneidung hergestellt. Die Kreisbewegungen können dabei durch den Bohrer selbst oder aber bei feststehendem Bohrer durch Kreisbewegungen der Fassadenplatte erzielt werden. In das in der Fassadenplatte in dieser Weise erstellte hinterschnittene Bohrloch wird dann das Spreizelement eingesetzt.

Vorzugsweise wird bei dem in dieser Weise ausgeführten Montageverfahren ein Bohrer verwendet, der einen sich zum Bohrschaft sich verjüngenden Bohrkopf aufweist wobei an der Stirnseite des Bohrkopfes eine kreisförmige Diamantplatte vorgesehen ist, an deren Umfang eine eine Schnittfläche bildende Fase ausgebildet ist. Durch die an der Diamantplatte des Bohrkopfes ausgebildete Fase werden Aufspaltungen der Fassadenplatte im Hinterschneidungsbereich des Bohrloches verhindert. Risse oder Aufspaltungen könnten insbesondere bei spitzwinkligen Erweiterungen am Bohrlochgrund auftreten. Durch die als Fase ausgebildete Schneidefläche am Umfang der Diamantplatte wird jedoch an der Ausreibung des Bohrlochgrundes eine im spitzen Winkel zum Bohrloch verlaufende Erweiterung vermieden und so die Gefahr von Rißbildungen beseitigt. Vorzugsweise ist außerdem auch der kegelförmige Teil des Bohrkopfes mit Diamant belegt.

In das mit einer Hinterschneidung versehene Bohrloch wird ein Spreizelement eingesetzt, das aus einem mit einem Außengewinde versehenen Bolzen und einer Scheibe mit daran befindlichen Spreizsegmenten besteht. Vorzugsweise weist der Bolzen in seinem in eine konisch sich verjüngende Bohrung der Scheibe einzuführenden Abschnitt eine Verjüngung auf. Der einen geringeren Durchmesser aufweisende Abschnitt des Bolzens entspricht dabei in seiner Länge der Länge der Spreizsegmente. Nach erfolgter Aufspreizung der Spreizsegmente im konisch hinterschnittenen Bohrloch wird insbesondere bei Vorhandensein von Klebstoff im hinterschnittenen Bohrloch eine feste Verankerung erzielt.

Beim Eindrehen des mit einem Außengewinde versehenen Bolzens in die konisch zulaufende Bohrung der Scheibe wird der Bolzen mit der Scheibe in den konisch zulaufenden Übergangsbereich von seinem größeren zu seinem geringeren Durchmesser fest verspannt wodurch eine hohe Steifigkeit erreicht wird. Der konische Übergang des einen größeren Durchmesser aufweisenden Abschnitts auf den verjüngten Abschnitt entspricht dabei dem konischen Zulauf der in der Scheibe befindlichen Bohrung.

Eine feste Verankerung des Bolzens in der mit den Spreizsegmenten versehenen Scheibe wird dadurch erreicht, daß der verjüngte Abschnitt des Bolzens mit seinem Außengewinde in das an den Spreizsegmenten befindliche Innengewinde eingreift.

Die Erfindung wird anhand der Zeichnung nähers erläutert.

Es zeigen:

Figur 1 eine räumliche Darstellung einer Fassadenplatte mit mehreren darauf angesetzten Bohrern,

Figur 2 ein in eine Fassadenplatte eingesetztes erfindungsgemäßes Spreizelement,

Figur 3 eine räumliche Darstellung der Scheibe mit daran befindlichen Spreizsegmenten und

Figur 4 die in Figur 3 dargestellte Scheibe von unten gesehen.

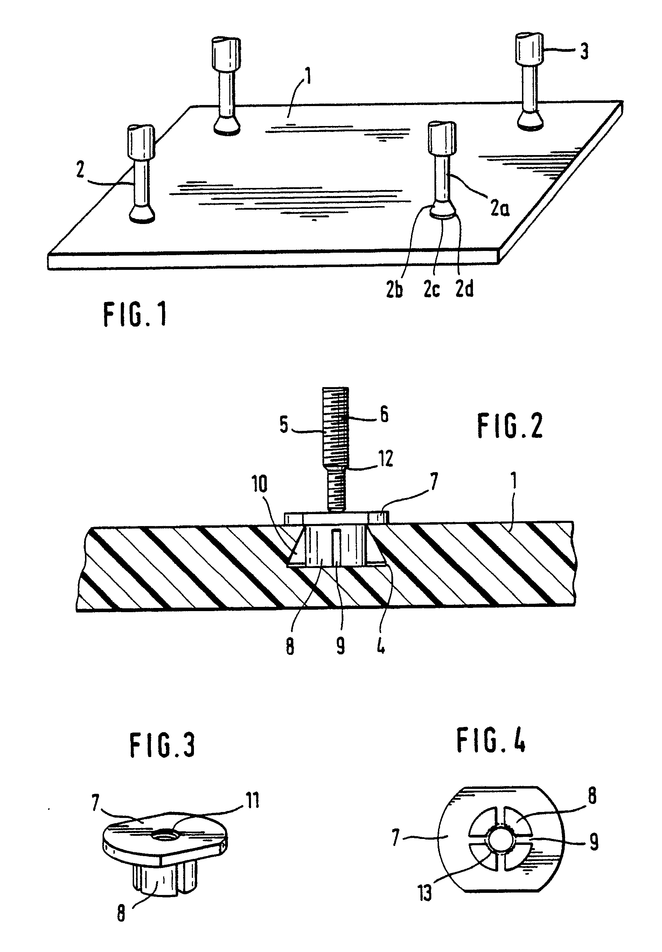

Aus Figur 1 ist eine Fassadenplatte 1 ersichtlich, auf die eine Bohrvorrichtung mit mehreren Bohrern 2 angesetzt wird. Die Bohreraufnahme 3 der Bohrvorrichtung ist dabei nur teilweise dargestellt. Am Bohrschaft 2a ist ein kegelförmiger Bohrkopf 2b ausgebildet, an dem eine kreisförmige Diamantplatte 2c angeordnet ist. Bei Absinken der Bohrvorrichtung auf die Fassadenplatte 1 bzw. durch eine gegen die Bohrung 2 ausgeführte Aufwärtsbewegung der Fassadenplatte 1 werden an dieser Bohrlöcher ausgefräst. Bei Auftreffen der Bohrer 2 auf den Bohrlochgrund wird dann mittels von durch die Bohrer 2 oder die Fassadenplatte 1 ausgeführten Kreisbewegungen der Bohrlochgrund mit einem Hinterschnitt versehen die den Umfang der Diamantplatte 2c umlaufende Fase 2d bewirkt, daß im erweiterten Bereich des konisch hinterschnittenen Bohrloches kein spitzer Winkel entsteht durch den Risse an der Fassadenplatte entstehen könnten. Vielmehr wird durch die an der Diamantplatte 2c ausgebildete Fase 2d im Bereich der Hinterschneidung ein aus Figur 2 ersichtlicher Absatz 4 geschaffen, der eine Riß- oder Spaltenbildung in diesem Bereich der Fassadenplatte 1 verhindert.

Das aus Figur 2 ersichtliche Spreizelement besteht aus einem mit einem Außengewinde 5 versehenen Bolzen 6, der in seinem obereren Bereich einen größeren Durchmesser aufweist als in seinem in die Scheibe 7 einzuführenden Bereich. An der Unterseite der Scheibe 7 sind Spreizsegmente 8 ausgebildet, die durch einen Längsschlitz 9 voneinander getrennt sind.

Durch Einschrauben des Bolzens 6 in die Scheibe 7 und die daran angeordneten Spreizsegmente 8 wird eine Aufspreizung der Spreizsegmente 8 bewirkt und eine feste Verankerung des Spreizelementes im Bohrloch erreicht. Diese Wirkung kann dadurch erhöht werden, daß in das konisch erweiterte Bohrloch 10 Klebstoff eingebracht wird.

Die in Figur 3 dargestellte Scheibe 7 besitzt eine konisch sich verengende Bohrung 11, in die der aus Figur 2 ersichtliche Bolzen 6 eingeschraubt wird. Der aus Figur 2 ersichtliche Übergangsbereich 12 wird bei vollständig in die Scheibe 7 eingedrehtem Bolzen 6 fest an der konisch zulaufenden Bohrung 11 verspannt. Da die Länge des verjüngten Abschnittes des Bolzens 6 der Länge der Spreizsegmente 8 entspricht ist bei vollständig eingedrehtem Bolzen 6 gewährleistet, daß eine vollständige Aufspreizung der Spreizsegmente 8 erfolgt, da der Bolzen mit seinem verjüngten Abschnitt nicht über den Bereich des Bohrlochgrundes hinaus in die Fassadenplatte eindringen kann.

In Figur 4 sind die an der Unterseite der Scheibe 7 befindlichen Spreizsegmente 8 ersichtlich, die durch einen Längsschlitz 9 voneinander getrennt sind. An der Innenseite der Spreizsegmente 8 ist ein Innengewinde 13 vorgesehen. Durch dieses wird eine feste Verankerung des in die Spreizsegmente 8 eingedrehten Bolzens 6 gewährleistet.

## Ansprüche

1. Verfahren zur Montage eines Spreizelementes in einem in eine Fassadenplatte oder dgl. mittels eines Bohrers hergestellten Bohrloch, **dadurch gekennzeichnet**, daß die Bohrung mit zumindest einem Bohrer (2), an dessen Bohrschaft (2a) ein kegelförmig ausgebildeter Bohrkopf (2b) angeordnet ist, in der Fassadenplatte (1) oder dgl. ausgeführt wird und im gleichen Arbeitsgang durch eine Kreisbewegung am Bohrlochgrund eine Hinterschneidung angebracht wird, wobei die Kreisbewegung durch den Bohrer (2) bei feststehender Fassadenplatte (1) oder durch eine Kreisbewegung ausführende Fassadenplatte (1) bei feststehendem Bohrer (2) ausgeführt werden.

2. Bohrer zur Herstellung konisch hinterschnittener Bohrlöcher bei einem Verfahren gemäß Anspruch 1, **dadurch gekennzeichnet**, daß der kegelförmige Bohrschaft mit Diamant belegt ist und das am Umfang der konisch verbreiterten Stirnseite eine als Schnittfläche ausgebildete Fase angeordnet ist.

3. Spreizelement bei einem Verfahren nach Anspruch 1, **dadurch gekennzeichnet**, daß ein mit einem Außengewinde (5) versehener Bolzen (6) mit einem an ihm ausgebildeten, im Durchmesser verjüngten, Abschnitt in eine in einer Scheibe (7) konisch sich verjüngende Bohrung (11) eingesetzt ist, wobei an der Unterseite der Scheibe (7) Spreizsegmente (8) ausgebildet sind, die ein Innengewinde (13) aufweisen.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - A1 - 3 207 599</u><br>(BRÜCKL-TECHNIK)<br>* Zeichnung * | 1 | B 28 D 1/14<br>F 16 B 13/12 |
| Y | | 2 | |
| | -- | | |
| Y | <u>DE - A - 1 652 889</u><br>(BAYERISCHE)<br>* Bezugszeichen 11 * | 1,2 | |
| | -- | | |
| Y | <u>US - A - 4 069 624</u><br>(HENRY)<br>* Bezugszeichen 23 * | 1,2 | |
| | -- | | |
| X | <u>EP - A1 - 0 307 590</u><br>(HILTI)<br>* Figuren 1,5 * | 3 | |
| | -- | | |
| X | <u>FR - A1 - 2 570 138</u><br>(MARTINET)<br>* Figuren 1-3 *<br>---- | 3 | |

RECHERCHIERTE
SACHGEBIETE (Int Cl⁵)

B 23 B
B 24 B
B 24 D
B 28 D
F 16 B

Der vorliegende Recherchenbericht wurde für alle Patentansprüche erstellt.

| Recherchenort | Abschlußdatum der Recherche | Prüfer |
|---|---|---|
| WIEN | 06-12-1990 | GLAUNACH |